Europäisches Patentamt

European Patent Office

Office européen des brevets

(11) Veröffentlichungsnummer : **0 260 538 B2**

(12) **NEUE EUROPÄISCHE PATENTSCHRIFT**

(45) Veröffentlichungstag der neuen Patentschrift :
19.01.94 Patentblatt 94/03

(51) Int. Cl.$^5$ : **C09K 7/02**

(21) Anmeldenummer : 87112867.4

(22) Anmeldetag : 03.09.87

(54) **Verwendung von quellfähigen, synthetischen Schichtsilikaten in wässrigen Bohrspül- und Bohrlochbehandlungsmitteln.**

Die Akte enthält technische Angaben, die nach dem Eingang der Anmeldung eingereicht wurden und die nicht in dieser Patentschrift enthalten sind.

(30) Priorität : 18.09.86 DE 3631764

(43) Veröffentlichungstag der Anmeldung :
23.03.88 Patentblatt 88/12

(45) Bekanntmachung des Hinweises auf die Patenterteilung :
02.05.91 Patentblatt 91/18

(45) Bekanntmachung des Hinweises auf die Entscheidung über den Einspruch :
19.01.94 Patentblatt 94/03

(84) Benannte Vertragsstaaten :
AT BE CH DE ES FR GB GR IT LI NL SE

(56) Entgegenhaltungen :
EP-A- 0 122 073
EP-A- 0 137 872
EP-A- 0 172 938
FR-A- 1 565 348
US-A- 4 436 862
Broschüre "Laponite inorganic colloids for salt water based drilling muds L.56"

(73) Patentinhaber : Henkel
Kommanditgesellschaft auf Aktien
D-40191 Düsseldorf (DE)

(72) Erfinder : Müller, Heinz
Goldregenweg 4
D-4019 Monheim (DE)
Erfinder : Herold, Claus-Peter, Dr.
Ostpreussenstrasse 2 b
D-4020 Mettmann (DE)
Erfinder : von Tapavizca, Stephan, Dr.
Thomas-Mann-Strasse 12
D-4006 Erkrath 2 (DE)
Erfinder : Dolhaine, Hans, Dr.
Mercatorstrasse 15
D-4000 Düsseldorf 11 (DE)
Erfinder : von Rybinski, Wolfgang, Dr.
Johannes-Hesse-Strasse 31
D-4000 Düsseldorf (DE)
Erfinder : Wichelhaus, Winfried, Dr.
Stifterstrasse 3
D-4020 Mettmann (DE)

(74) Vertreter : Fues, Johann Friedrich, Dr. et al
Patentanwälte von Kreisler-Selting-Werner,
Postfach 10 22 41
D-50462 Köln (DE)

EP 0 260 538 B2

## Beschreibung

Bei der Suche nach neuen Erdöl- und Erdgaslagerstätten ist es erforderlich, immer tiefere Bohrungen niederzubringen und schwierigere Formationen zu durchbohren. An die Bohrspülungen werden deshalb immer höhere Anforderungen in Bezug auf Temperatur- und Elektrolytstabilität gestellt. Außerdem sind immer stärker ökologische Aspekte beim Einsatz solcher Flüssigkeiten und bei der anschließenden Deponie zu berücksichtigen.

Für vergleichsweise flache Bohrungen werden heute vielfach Spülungen auf Basis Bentonit in Kombination mit Polysaccharid-Verbindungen verwendet. Geeignete Polysaccharide sind beispielsweise Stärke, Carboxymethylcellulose (CMC), Carboxymethylhydroxyethylcellulose (CMHEC), Hydroxyethylcellulose (HEC) und dergleichen. Die Polysaccharide sind aber nur bis ca. 120 bis 150 °C stabil.

Für das Arbeiten bei höheren Bohrloch-Temperaturen werden deshalb heute entweder Flüssigkeiten auf Basis von Mineralölen verwendet oder aber es werden wäßrige Systeme eingesetzt, die spezielle synthetische Polymere mit höherer Temperaturstabilität als die Polysaccharide aufweisen. Die Entwicklung wäßriger Bohrspülsysteme hat zu einer Mehrzahl von Vorschlägen solcher verbesserter Polymerkomponenten geführt, die im allgemeinen zusammen mit quellfähigen Schichtsilikaten, insbesondere zusammen mit Bentoniten unterschiedlichen Aufarbeitungszustandes zur Verwendung kommen. Einige typische Beispiele der neueren Vorschläge für solche Polymer-Verbindungen finden sich in den folgenden Druckschriften: DE-A-31 44 770, DE-A-34 04 491, EP-A-0 122 073 und EP-A-0 131 124.

Alle bisher bekannten Systeme zeigen jedoch noch deutliche Schwächen bei Temperaturen oberhalb von 200 °C und insbesondere in Gegenwart hoher Konzentrationen von Erdalkalimetallionen.

Ferner werden in der FR-A-1 565 348 (= DE-A-16 67 502) synthetische, tonähnliche Mineralien sowie ein Verfahren zu deren Herstellung beschrieben. Diese Mineralien weisen die allgemeine Formel

$$[Si_8Mg_aLi_bH_{4+c}O_{24}]^{(12-2a-b-c)} \cdot M(12-2a-b-c)^+$$

auf, wobei M ein Natrium-Kation, ein Lithium-Kation oder ein Äquivalent eines organischen Kations bedeutet und a, b und c einen Wert haben, daß entweder a < 6, b > 0, c > 0 und b + c < 2, $\pm(a + b + c-6) < 2$ oder a < 6, b = 0, $\pm c < 2$ und $\pm(a+c-6) < 2$ ist. Das Kationenaustauschvermögen dieser Mineralien liegt im Bereich von ca. 50 bis 120 m.e.q/100 g. Sofern M ein Natrium- oder ein Lithium-Kation bedeutet, weist eine 2%ige Dispersion dieser Mineralien in Leitungswasser eine Bighamsche Fließgrenze von ca 50 bis 250 dyn/cm$^2$ auf. Die Kristallstruktur dieser synthetischen Mineralien ist ähnlich derjenigen des natürlichen Hectorits. Wäßrige Dispersionen dieser Mineralien weisen rheologische Eigenschaften auf, die besser sind als diejenigen natürlicher Tone ähnlicher Struktur. Derartige synthetische, quellbare Tonmaterialien können unter anderem - zusammen mit sogenannten Peptisierungsmitteln, insbesondere Alkallmetallsalzen mit mehrwertigen Anionen - als Mörtel- oder Füllstoffzubereitungen Verwendung finden. Beispielsweise enthält eine solche Mörtelzubereltung ein Gemisch aus Zement, Flugasche und/oder einem anderem Füllstoff, ein oder mehrere der synthetischen Tonmaterialien sowie mindestens ein Peptisierungsmittel. Solche Zubereitungen sind verwendbar beim Tunnelbau in weichen Böden, zum Abdichten von Eindeichungen, zum Verschließen von Rissen im Gestein sowie von Bohrlöchern und zur Herstellung permanenter Wassersperren.

In einem nicht datierten Merkblatt "LAPONITE, Inorganic Colloids for salt water based Drilling Muds" werden 2 LAPONITE-Typen für Salzwasser-muds (SDS 308) und gesättigte Salzlösungen (SDS 299) beschrieben. Es wird angegeben, daß mit diesen anorganischen Gelbildnern Seewasser-basierte Bohrspülungen hergestellt werden können.

Die US-PS 4 436 862 beschreibt Verdickungssysteme auf Basis von Abmischungen aus thermoinstabilen Polyurethanen und synthetischen quellfähigen Mineralverbindungen von der Art des Hectorits. Das Verdickersystem soll dadurch in Temperaturbereichen stabilisiert werden, wie sie z.B. durch Sonneneinstrahlung - etwa in Kraftfahrzeugen, Warenhäusern und dergleichen - auftreten. Als Bemessungstemperatur sind 140 °F (ca. 55 °C) genannt.

Die US-A-4 267 062 betrifft Mittel, die zum Verschließen von Bohrlöchern, welche aufgegeben werden sollen, dienen. Derartige Mittel enthalten ein mit Wasser quellfähiges Tonmaterial, ein wasserlösliches Alkalimetallsalz und ein Salz der Carboxymethylcellulose. Als quellfähige Tone kommen natürliche und synthetische Smectite. beispielsweise Montmorillonit, Bentonit, Beidellit, Hectorit, Saponit und Stevensit, in Frage. Beim Einsatz dieser Mittel zum Verschluß eines aufgegebenen Bohrloches werden die Mittel mit Wasser oder einem wäßrigen Bohrspülmittel vermischt und der so erhaltene wäßrige Slurry in die gesamte Tiefe des Bohrloches eingebracht und darin belassen.

Demgegenüber liegt der vorliegenden Erfindung die Aufgabe zugrunde, verdickende, insbesondere thixotropierende Hilfsmittel für insbesondere waßrige Bohrspülungen und andere waßrige Bohriochbehandlungsflüssigkeiten aufzuzeigen, die hohe Wirkungsstabilität auch bei Temperaturen oberhalb 200 °C zeigen, auch in Gegenwart hoher Konzentrationen von Erdalkalimetallionen keinen unzumutbar starken Abfall der viskositätserhöhenden Wirkung zeigen oder zumindest deutlich besser sind als die vergleichbaren bisher eingesetzten Verbindungen und sich dabei bedenkenlos mit den im Stand der Technik entwickelten temperaturstabilen Polymer-Verbindungen abmischen lassen, so daß wenigstens ein substantieller Ersatz dieser ökologisch doch nicht völlig unbedenklichen Komponenten durch ein ökologisch einwandfreies Material möglich wird.

Es hat sich überraschenderweise gezeigt, daß bestimmte synthetisch hergestellte Schichtsilikate der im nachfolgenden angegebenen allgemeinen Summenformel (1) hochquellfähige viskositäteserhöhende Zusatzstoffe für waßrige Systeme sind, die in Abmischung mit den im nachfolgenden beschriebenen Polymerverbindungen dem gestellten Anforderungsprofil entsprechen.

Gegenstand der Erfindung ist dementsprechend die Verwendung von synthetischen quellfähigen Schichtsilikaten der allgemeinen Formel (I)

$$MgO \cdot aMA \cdot bAl_2O_3 \cdot cSiO_2 \cdot nH_2O \qquad (I)$$

in der bedeuten

$M = Na^+$ und/oder $Li^+$ bei einem Na/Li-Verhältnis gleich oder größer 1

$$A = F^-, OH^- \text{ und/oder } 1/2\ O^{2-}$$

sowie

a, b, c und n Zahlen sind gemäß

a $\qquad$ = 0,1 bis 0,6

b $\qquad$ = 0 bis 0,3

c $\qquad$ = 1,2 bis 1,7

n $\qquad$ = 0 bis 3,0

als Hochtemperatur-stabile und gegen Erdalkaliionen unempfindliche mineralische Komponente zusammen mit Polymer-Verbindungen aus den Klassen der Polyvinylsulfonsäuren, insbesondere entsprechender Homopolymerisate, oder sulfonierter Styrolpolymerisate, insbesondere entsprechender Copolymerisate aus Vinylsulfon- oder Styrolsulfonsäure mit Vinylacylamiden und gegebenenfalls Acryl- und/oder Methacrylamid bei der thixotropen Eindickung von wäßrigen Bohrspülmitteln, Bohrlochreinigungslösungen, Trägerflüssigkeiten für hydraulische Rißbildung und Ringraumflüssigkeiten.

Wenn nachfolgend auch von Bohrlochbehandlungsmitteln oder Bohriochbehandlungsflüssigkeiten die Rede ist, so sind darunter - neben Bohrspülmitteln - die vorstehend genannten Bohrlochreinigungslösungen, Trägerflüssigkeiten für hydraulische Rißbildung und Ringraumflüssigkeiten zur verstehen.

Besondere Bedeutung haben im erfindungsgemäßen Handeln Schichtsilikate der allgemeinen Formel (I), die frei von Fluor sind.

Schichtsilikate der erfindungsgemäß betroffenen Art lassen sich struktursystematisch der Klasse der Hectorite und/oder der Saponite zuordnen. Natürlicher Hectorit ist bekanntlich ein üblicherweise stark mit Calcium-Verbindungen verunreinigtes Schichtsilikat aus der Klasse der Smectite. Das am häufigsten vorkommende Material dieser Klasse, der Bentonit, ist wie bereits ausgeführt, ein bekanntes mineralisches Verdickungsmittel für wäßrige Bohrspülsysteme, der hier betroffenen Art. Bentonite als mineralischer Bestandteil der Bohrspülmittel sind jedoch gegenüber Temperatureinfluß und gegenüber der Gegenwart von Erdalkaliionen weitaus sensitiver als die erfindungsgemäß definierte Klasse synthetischer Schichtsilikate der allgemeinen Formel (I). In der Praxis werden heute für Hochtemperaturanwendungen in Bohrspülsystemen vielfach Sepiolithe und/oder Attapulgite anstatt Bentonit eingesetzt. Diese mineralischen Hilfsmittel zeigen zwar größere Temperaturstabilität als Bentonit, aber nur eine sehr geringe Verdickungswirkung. Die erfindungsgemäß eingesetzten hochquellfähigen Schichtsilikate der allgemeinen Formel (I) zeichnen sich demgegenüber durch eine sehr viel stärkere Verdickungswirkung aus. Aufgrund der erfindungsgemäßen Maßnahme, Gemische von synthetischen Komponenten der beschriebenen Art einzusetzen, gelingt es darüberhinaus, homogene und gleichbleibende Produkteigenschaften sicherzustellen.

Quellfähige Schichtsilikate der erfindungsgemäßen Definition bilden in Wasser oder Elekrolytlösungen klare Gele mit ausgezeichneter Verdickungswirkung und Thixotropie. Diese Eigenschaft wird auch durch Elektrolytbelastung in akzeptierbarem Rahmen, d. h. für die weitere Anwendung nicht nachteilig beeinflußt. Die Temperaturbelastung beeinträchtigt das System wie die folgenden Untersuchungen zeigen kaum:

I. Viskositätsverhalten

Das Viskositätsverhalten eines erfindungsgemäß verwendeten synthetischen Hectorits in Wasser- und Salzlösungen und Vergleichswerte zum Einsatz üblicherweise verwendeten Bentonits ergeben sich aus der nachfolgenden Tabelle I. Alle Messungen sind dabei bei Raumtemperatur vorgenommen. Die Viskositätsangaben sind in mPas gemacht (Brookfield RVT).

## Tabelle I

| | Hectorit-Konzentration | | | Bentonit-Konzentration |
|---|---|---|---|---|
| | 1.0% | 2.0% | 2.5% | 2.5% |
| Leitungswasser | 30 | 2550 | 2750 | 152 |
| 2.5% NaCl | | | 400 | 50 |
| 2.5% CaCl$_2$ | | | 350 | 43 |

Quellzeit für alle Lösungen 8 h

### II. Temperaturstabilität

Die besondere Eignung des erfindungsgemäß ausgewählten mineralischen Materials für den beabsichtigten Einsatzzweck bei hohen Temperaturen geht aus der nachfolgenden Tabelle II hervor. Hier wurde eine Aufschlemmung eines erfindungsgemäßen Schichtsilikats (2,5 Gew.-% Feststoff) in Leitungswasser im Stahlautoklaven bei verschiedenen Temperaturen erhitzt. Die Temperaturbelastung betrug in allen Fällen 12 Stunden.

## Tabelle II

| Temperatur | Viskosität nach Temperaturbelastung (mPas) |
|---|---|
| vor Temperaturbe- lastung (Ausgangswert) | 4950 |
| 200 °C | 5100 |
| 250 °C | 5350 |
| 300 °C | 5500 |
| 350 °C | 5450 |

Synthetische Schichtsilikate der allgemeinen Formel (I) mit hohem Quellvermögen sind an sich bekannte Verbindungen, deren Herstellung prinzipiell bekannt ist und die auch als Handelsprodukte zugänglich sind. Bekannte Beispiele hierfür sind die von der Firma Deutsche Solvay-Werke GmbH unter der geschützten Handelsbezelchnung "Laponite" vertriebenen Materialien. Zur Herstellung erfindungsgemäß besonders geeigneter Materialien gelten die nachfolgenden Angaben.

Die Synthese von Schichtsilikaten, insbesonderen von Hectoriten, ist in der Literatur vielfach beschrieben worden (H. Strese und U. Hoffmann, Z.Anorg.Allg.Chem. 247 (1941) 65 - 95; W.T. Granquist und S.S. Pollack in "Clays an Clay Minerals" Natl. Acad. Sci., Natl. Res. Council Publ. 8 (1960) 150 - 169. DE-A-1 667 502). Zur Herstellung der erfindungsgemäß eingesetzten synthetischen, feinteiligen, wasserunlöslichen Schichtsilikate werden beispielsweise Natriumsilikatlösungen zusammen mit Oxiden, Hydroxiden und/oder wasserlöslichen Salzen von Magnesium sowie Aluminium und/oder Lithium in den Molverhältnissen des zu synthetisierenden mischkristallinen Schichtsilikates in wäßriger Lösung bzw. Aufschlämmung einer hydrothermalen Behandlung unterworfen. Es kann dabei in Gegenwart eines Alkaliüberschusses gearbeitet und insbesondere Natronlauge und/oder Soda als Überschußalkali eingesetzt werden. Vor der hydrothermalen Behandlung wird unter starkem Rühren ein Vorgemisch aus den einzelnen Komponenten hergestellt. Dieses kann in einem separaten Ansatzbehälter oder direkt im Autoklaven erfolgen. Es bildet sich eine feinteilige Suspension, deren Viskosität mit steigendem Feststoffgehalt zunimmt. Die nachfolgende hydrothermale Umsetzung des Reaktionsgemisches erfolgt im Autoklaven unter Rühren bei 150 bis 250 °C, vorzugsweise bei 170 bis 200 °C, bei einem der Reaktionstemperatur entsprechendem Gleichgewichtsdampfdruck. Die Reaktionszeit liegt zwischen 1 und 20 Stunden. vorzugsweise zwischen 2 und 8 Stunden. Reaktionstemperaturen zwischen 170 und 190 °C mit Reaktionszeiten zwischen 4 und 6 Stunden werden beim hydrothermalen Prozeß besonders bevorzugt.

Gemäß der Erfindung werden diese Schichtsilikate jedoch in Abmischung mit den genannten Polymer-Verbindungen verwendet, um weitere wichtige Eingenschaften für Bohrspülungen und/oder andere Bohrlochbehandlungsflüssigkeiten einzustellen.

Für die wichtigste erfindungsgemäße Ausführungsform - nämlich für den Einsatz der Spül-und Behandlungsmittel unter hohen Temperaturen von beispielsweise 175 °C und darüber - werden damit solche Polymer-Verbindungen verwendet. die speziell für die Hochtemperatur-Anwendung auf dem hier betroffenen Gebiet entwickelt worden sind. In Kombination mit Polymer-Verbindungen dieser Art zeigen sich gegenüber dem Stand der Technik letztlich die Vorteile für den Einsatz der erfindungsgemäß vorgeschlagenen Thixotropierungsmittel auf Schichtsilikat-Basis am stärksten. Geeignete Hochtemperatur-beständige Polymere für die hier betroffenen Anwendungsgebiete sind beispielsweise synthetische Polyvinylsulfonsäuren, insbesondere entsprechende Homopolymerisate oder auch ausgewählte sulfonierte Styrolpolymerisate, inbesondere entsprechende Copolymerisate aus Vinylsulfon- bzw. Styrolsulfonsäure mit Vinylacylamiden und gewünschtenfalls Acryl- und/oder Methacrylamid. Zum einschlägigen druckschriftlichen Stand der Technik wird beispielsweise verwiesen auf die DE-A-31 44 770 oder die offengelegte EP-A-0 122 073. Kombinationen dieser Art können in Bohrspül- und/oder entsprechenden Behandlungsmitteln verwendet werden, die zum Einsatz bei Temperaturen oberhalb 175 °C und insbesondere bei Temperaturen von wenigstens 200 °C kommen.

Die organischen Polymer-Verbindungen werden üblicherweise nur in begrenzten Mengen eingesetzt. Geeignet sind beispielsweise Mengen der Polymer-Verbindungen bis etwa 5 Gew.-% - bezogen auf das zum Einsatz kommende Fertigprodukt - wobei auch schon deutlich geringere Mengen - beispielsweise solche bis etwa 3 Gew.-% - im Einsatz wertvolle Effekte liefern. Auch die erfindungsgemäß eingesetzten Schichtsilikate der allgemeinen Formel (I) werden in nur beschränkten Mengen eingesetzt, die üblicherweise etwa 3 Gew.-% - bezogen auf fertige, zum Einsatz kommende wäßrige Abmischung - nicht überschreiten. Schon sehr kleine Mengen der erfindungsgemäßen Schichtsilikate, beispielsweise solche von etwa 0.1 Gew.-%, liefern deutliche Ergebnisse, so daß bevorzugte Anwendungsmengen im Bereich von etwa 0,1 bis 2,5 Gew.-% und insbesondere innerhalb des Bereiches von etwa 0,5 bis 2 Gew.-% liegen - Gew.-% jeweils wieder bezogen auf das fertige, zum Einsatz kommende wäßrige Spül- bzw. Behandlungsmittel.

Beim gemeinsamen Einsatz der hochquellfähigen Schichtsilikate und organischer Polymer-Verbindungen können diese Komponenten ihrerseits in praktisch beliebigen Mischungsverhältnissen, also beispielsweise in entsprechenden Mischungsverhältnissen von 2 : 98 bis 98 : 2 verwendet werden. Besonders geeignet sind Mischungsbereiche dieser Komponenten im Verhältnis von 30 : 70 bis 70 : 30 Gew.-Teilen.

Aufgrund der hohen Wirksamkeit der erfindungsgemäß verwendeten synthetischen quellfähigen Schichtsilikate eignen sich damit hergestellte Abmischungen mit temperaturbeständigen Polymer-Verbindungen besonders für die Verwendung in Feststoffarmen Bohrspülmitteln, die gleichwohl die von der Praxis geforderten Leistungen erbringen und darüberhinaus die Vorteile der Beständigkeit gegen den Einfluß hoher Temperaturen und/oder hoher Konzentrationen an Erdalkaliionen besitzen.

Mit den Mitteln der Erfindung können dementsprechend Feststoff-arme Bohrspülmittel zum Einsatz kommen, deren Feststoff-Gehalt in bevorzugten Ausführungsformen etwa 10 Gew.-% und insbesondere etwa 7 Gew.-% nicht Überschreitet.

Die erfindungsgemäßen Schichtsilikate der allgemeinen Formel (I) kommen üblicherweise in nicht- hydrophobierter Form zum Einsatz. Zusammen mit Ihnen können andere Feststoffe verwendet werden, als Beispiele hierfür seien feinteilige Kieselsäure, insbesondere pyrogene Kieselsäure oder Fällungskieselsäure bzw. modifizierte Typen von solchen und/oder feinteilige Zeolith-Verbindungen, insbesondere Zeolith NaA genannt.

Die Anwendung der erfindungsgemäßen Schichtsilikate in wäßrigen Bohrspülmitteln ist einfach. So werden beispielsweise die Schichtsilikate zusammen mit Wasser als 2 bis 2,5 %ige Aufschlämmung angesetzt. Hierfür reichen geringe mechanische Rührleistungen. Nach einer Quellzeit von wenigen Stunden liegt eine fast klare Gelstruktur vor, welche durch weiteres Verdünnen auf die gewünschte Einsatzkonzentration eingestellt werden kann. Sollten in Ausnahmefällen höhere Viskositäten gefordert sein, so können diese durch entsprechende Konzentrationserhöhungen, bis zu 5 %, in derselben Weise hergestellt werden.

Beispiele

Beispiel 1:

Herstellung eines erfindungsgemäß zu verwendenden synthetischen Schichtsilikates vom Hektorit-Typ. 394 g Magnesiumsulfatheptahydrat werden in 4 l entionisiertem Wasser gelöst und unter Rühren mit hoher Scherkraft mit einer Mischung aus 273 g einer 50 %igen Natronlauge und 537 g einer Natriumsilikatlösung, die 27 g $SiO_2$ und 8 g $Na_2O$ in 100 g enthält, versetzt. Es bildet sich eine feinteilige Suspension, der unter weiterem Rühren 19 g $Li_2CO_3$ zugefügt werden. Nach beendeter Zugabe wird weitere 5 Minuten gerührt.

Die Suspension wird anschließend in einem Rührautoklaven innerhalb von 20 Minuten auf 180 °C erhitzt und 4 Stunden bei dieser Temperatur gehalten. Nach Abkühlen auf 50 bis 60 °C wird der Autoklav entleert und das entstandene Produkt von der Mutterlauge abfiltriert. Der Filterkuchen wird mit insgesamt 2,5 l entionisiertem Wasser sulfatfrei gewaschen und im Umlufttrockenschrank bei ca. 120 °C getrocknet.

Die Analyse des Produktes ergab folgende Zusammensetzung (in Gew.-%):
MgO: 25,3 %,      $Na_2O$: 5 %,      $Li_2O$: 1,3 %,      $SiO_2$: 54,5 %,      $H_2O$: 12,5 %.

Beispiel 2:

Die ausgezeichnete Eignung erfindungsgemäßer synthetischer Schichtsilikate als mineralischer Bestandteil der erfindungsgemäß beschriebenen Bohrspülsysteme, insbesondere für die Herstellung Feststoff-armer Spülungen, geht aus den nachfolgenden Versuchen hervor. Es werden die 3 Bohrspülungen, A, B und C -hier allerdings noch ohne Mitverwendung temperaturstabiler Polymer verbindungen- hergestellt und auf ihre Eignung für den beabsichtigen Einsatzzweck geprüft. Die an diesen Kombinationen bestimmten rheologischen Daten und Wasserverluste sind in der nachfolgenden Tabelle III zusammengestellt. Die rheologischen Prüfungen wurden dabei mit einem für Bohrspülungen gebräuchlichen Fann 35 Viskosimeter durchgeführt. Die Spülung wurde vor der Messung bei 175 °C 24 Stunden lang im Roller Oven (Fa. Baroid) gealtert. Die rheologischen Messungen erfolgten bei Raumtempe- ratur. Die Messung des Wasserverlustes wurde in der HTHP-Filterpresse bei 175 °C vorgenommen.

Bohrspülung A (unbeschwert)

| | |
|---|---|
| 350,00 ml | Leitungswasser |
| 3,50 g | erfindungsgemäßes Schichtsilikat |
| 5,00 g | Chromlignit |
| 3,00 ml | Diethanolamin |
| 10,00 g | Schmiermittel |
| 1,75 g | Entschäumer |

Bohrspülung B (unbeschwert)

wie Spülung A, jedoch Lignit anstelle Chrom-Lignit

Bohrspülung C (beschwert)

wie Bohrspülung A, jedoch Zugabe von 265 g Baryt

## Tabelle III

|  | Bohrspülung | | |
|---|---|---|---|
|  | A | B | C |
| scheinbare Viskosität (mPas) | 9 | 9,5 | 12,5 |
| plastische Viskosität (mPas) | 7,5 | 6 | 9 |
| Fließgrenze (lbs/100 ft$^2$) | 2,5 | 7 | 7 |
| Gelstärke (lbs/100 ft²) 10'' | 2 | 3 | 5 |
| Gelstärke (lbs/100 ft²) 10 ' | 10 | 14 | 8 |
| HTHP-Wasserverlust nach 30 Min. (ml) | 3,6 | 3,5 | 4 |

Beispiel 3:

Dieses Beispiel zeigt das Viskositätsverhalten von erfindungsgemäß verwendetem synthetischen Hectorit im Vergleich zu natürlichem Hectorit, sowohl in destilliertem als auch in Leitungswasser.

Tabelle IV.

Vergleich zwischen natürlichem und synthetischem Hectorit

| Produkt | Brookfield-Viskosität Spindel 2 (20 UpM) |
|---|---|
| 2,5 Gew.-% natürlicher Hectorit in destilliertem Wasser | 10 mPas |
| 2,5 Gew.-% natürlicher Hectorit in Leitungswasser | 160 mPas |
| 2,5 Gew.-% synthetischer Hectorit in destilliertem Wasser | > 600 mPas |
| 2,5 Gew.-% synthetischer Hectorit in Leitungswasser | 15000 mPas |

Aus dem Vergleich ist ersichtlich, daß mit Hilfe des erfindungsgemäß zu verwendenden synthetischen Hectorits wesentlich höhere Viskosiätswerte resultieren.

Beispiel 4:

Es wurden Bohrspülungen der folgenden Zusammensetzung miteinander verglichen:
350 ml   einer 1,25 Gew.-%igen wäßrigen Schichtsilikatlösung
90 g   NaCl
10 g   Hostadrill
150 g   Baryt (Bariumsulfat)
(Hostadrill = Polymer Hoe E 2825 der Fa. Hoechst AG, Frankfurt; Copolymer aus Vinylsulfonsäure und N-Vinylcarbonsäureamid)
Als Schichtsilikate wurden die folgenden Produkte eingesetzt:
a) erfindungsgemäßer synthetischer Hectorit,
b) natürlicher Hectorit,
c) Bentonit,
d) Blindversuch ohne Zusatz, d.h. anstelle der Schichtsillkatlösung wurde nur Wasser eingesetzt
Die ermittelten Werte sind aus Tabelle V ersichtlich; hierin bedeutet API Fluid Loss = Wasserverlust im API-Filterpressen-Test:
Die Spülungen b, c und d zeigen wesentlich geringere Viskositäten als die Spülung a mit dem erfindungsgemäßen synthetischen Schichtsilikat. Der Wasserverlust ist bei Spülung a am geringsten und steigt auch nach Alterung nur sehr geringfügig an.
Bei Verwendung von natürlichem Hectorit (Spülung b) werden geringere Viskositäten erreicht und der Fluid Loss ist sehr hoch.
Die Spülung b, c und d zeigen sämtlich nach der Alterung im Roller Oven eine vollständige Barytabsetzung. Dies ist aus den rheologischen Daten (keine Fließgrenze) auch zu erwarten.

Tabelle V:

Vergleich von Bohrspülungen

| | a | b | c | d |
|---|---|---|---|---|
| scheinbare Viskosität (mPas) | 52 | 24 | 15 | 14 |
| plastische Viskosität (mPas) | 41 | 28 | 15,5 | 15 |
| Fließgrenze (lb / 100 ft$^2$) | 31 | - | - | - |
| API Fluid Loss (30 Min.) (ml) | 1,5 | 15 | 3 | 80 |
| API Fluid Loss (30 Min.) nach Alterung bei 177 °C, 16 h (ml) | 3 | 25 | 8 | 12 |
| Bewertung | keine Baryt-absetzung | vollständige Barytabsetzung | vollständige Barytabsetzung | vollständige Barytabsetzung |

. . .

Beispiel 5

Das rheologische Verhalten einer 1,2 Gew.-%igen Lösung des erfindungsgemäß zu verwendenden Hectorits wurde über den Temperaturbereich von 30 bis 200 °C in einem Hochdruck-/Hochtemperatur-viskosimeter gemessen. Die Hectoritlösung wurde durch Zusatz von Alkali auf pH 11 eingestellt. Die Ergebnisse sind in Tabelle VI dargestellt.

**Tabelle VI**

Rheologische Daten einer Lösung eines erfindungsgemäßen synthetischen Hectorits bei 30 bis 200 °C

| Meßtemperatur (°C) | pH 11 mit NaOH eingestellt | | pH 11 mit LiOH eingestellt | |
| --- | --- | --- | --- | --- |
| | plastische Viskosität (mPas) | Binghamsche Fließgrenze (dPa) | plastische Viskosität (mPas) | Binghamsche Fließgrenze (dPa) |
| 30 | 5 | 12 | 6 | 11 |
| 50 | 4 | 11 | 5 | 17 |
| 80 | 4 | 15 | 4 | 19 |
| 100 | 4 | 15 | 3 | 16 |
| 150 | 2 | 12 | 2 | 15 |
| 200 | 2 | 10 | 2 | 11 |

Aus den gemessenen Daten ist die gute Temperaturstabilität des erfindungsgemäß als mineralischer Bestandteil einzusetzenden Hectorits ersichtlich. Die plastische Viskosität nimmt mit steigender Temperatur nur langsam ab. Die Fließgrenze ist über den ganzen Temperaturbereich relativ konstant. Der erfindungsgemäße Hectorit ist also ausgezeichnet für den Einsatz in Bohrspülungen und anderen Bohrlochbehandlungsmitteln geeignet.

**Patentansprüche**

1. Verwendung von synthetischen quellfähigen Schichtsilikaten der allgemeinen Formel (I)

$$MgO \cdot aMA \cdot bAl_2O_3 \cdot cSiO_2 \cdot nH_2O \qquad (I)$$

In der bedeuten

M = Na$^+$ und/oder Li$^+$ bei einem Na/Li-Verhältnis gleich oder größer 1

A = F$^-$, OH$^-$ und/oder 1/2 O$^{2-}$

sowie

a, b, c und n Zahlen sind gemäß

a = 0,1 bis 0,6

b = 0 bis 0,3

c = 1,2 bis 1,7

n = 0 bis 3,0

als Hochtemperatur-stabile und gegen Erdalkaliionen unempfindliche mineralische Komponente zusammen mit Polymer-Verbindungen aus den Klassen der Polyvinylsulfonsäuren, insbesondere entsprechender Homopolymerisate, oder sulfonierter Styrolpolymerisate, insbesondere entsprechender Copolymerisate aus Vinylsulfon- oder Styrolsulfonsäure mit Vinylacylamiden und gegebenenfalls Acryl- und/oder Methacrylamid, bei der thixotropen Eindickung von wäßrigen Bohrspülmitteln, Bohrlochreinigungslösungen, Trägerflüssigkeiten für hydraulische Rißbildung und Ringraumflüssigkeiten.

2. Ausführungsform nach Anspruchen 1, dadurch gekennzeichnet, daß die Schichtsilikate der allgemeinen Formel (I) in Bohrspül- und/oder Bohrlochbehandlungsmitteln verwendet werden, die zum Einsatz bei Temperaturen oberhalb von 175 °C, insbesondere bei Temperaturen von wenigstens 200 °C, kommen.

3. Ausführungsform nach Ansprüchen 1 und 2, dadurch gekennzeichnet, daß die Schichtsilikate der allgemeinen Formel (I) in Mengen bis zu 3 Gew.-%. vorzugsweise in Mengen von bis 2,5 Gew.-% und insbesondere in Mengen von 0,5 bis 2 Gew.-%, verwendet werden - Gew.-% jeweils bezogen auf das wäßrige Bohrspül-und/oder Bohrlochbehandlungsmittel.

4. Ausführungsform nach Ansprüchen 1 bis 3, dadurch gekennzeichnet, daß im wesentlichen fluorfreie Schichtsilikate der allgemeinen Formel (I) verwendet werden.

5. Ausführungsform nach Ansprüchen 1 bis 4, dadurch gekennzeichnet, daß die Schichtsilikate der allgemeinen Formel (I) in nicht hydrophobierter Form zum Einsatz kommen.

6. Ausführungsform nach Ansprüchen 1 bis 5, dadurch gekennzeichnet, daß die wasserlöslichen organischen Polymer-Verbindungen in Mengen bis etwa 5 Gew.-%, vorzugsweise in Mengen nicht über etwa 3 Gew.-% - jeweils bezogen auf die wäßrige Gesamtphase - zum Einsatz kommen.

7. Ausführungsform nach Ansprüchen 1 bis 6 dadurch gekennzeichnet, daß Mischungen von Schichtsilikaten der allgemeinen Formel (I) und wasserlöslichen organischen Polymer-Verbindungen in Mengenverhältnissen von 2 : 98 bis 98 : 2 Gew.-Teilen, insbesondere im Bereich von etwa 30 : 70 bis 70 : 30 Gew.-Teilen, verwendet werden.

8. Ausführungsform nach Ansprüchen 1 bis 7 dadurch gekennzeichnet, daß die Bohrspül- und/oder -behandlungsmittel zusätzlich feinteilige Kieselsäure, insbesondere pyrogene Kieselsäure oder Fällungskieselsäure bzw. modifizierte Typen solcher und/oder feinteilige kristalline Zeolithe, insbesondere Zeolith NaA, enthalten.

9. Ausführungsform nach Ansprüchen 1 bis 8, dadurch gekennzeichnet, daß die Schichtsilikate der allgemeinen Formel (I) in feststoffarmen Bohrspülmitteln zum Einsatz kommen, deren Feststoffgehalt bevorzugt etwa 10 Gew.-% und insbesondere etwa 7 Gew.-% nicht überschreitet.

**Claims**

1. The use of synthetic swellable layer silicates corresponding to the following general formula

$$MgO \cdot aMA \cdot bAl_2O_3 \cdot cSiO_2 \cdot nH_2O \qquad (I)$$

in which

M = $Na^+$ and/or $Li^+$ for an Na:Li ratio of, or greater than,

A = $F^-$, $OH^-$ and/or $1/2\ O^{2-}$ and

a, b, c and n are numbers having the following values:

a = 0.1 to 0.6

b = 0 to 0.3,

c = 1.2 to 1.7,

n = 0 to 3.0,

as high-temperature-stable mineral component unaffected by alkaline earth metal ions together with polymer compounds from the classes of polyvinyl sulfonic acids, more especially corresponding homopolymers, or sulfonated styrene polymers, more particularly corresponding copolymers of vinyl sulfonic acid or styrene sulfonic acid with vinyl acylamides and optionally acryl and/or methacrylamide in the thixotropic thickening of water-based drilling fluids, borehole cleaning solutions, carrier fluids for hydraulic crack formation and annular-space fluids.

2. The use claimed in claim 1, characterized in that the layer silicates corresponding to general formula (I) are used in drilling fluids and/or well-servicing fluids which are used at temperatures above 175°C and more especially at temperatures of at least 200°C.

3. The use claimed in claims 1 and 2, characterized in that the layer silicates corresponding to general formula (I) are used in quantities of up to 3% by weight, preferably in quantities of from 0.1 to 2.5% by weight and more preferably in quantities of from 0.5 to 2% by weight, based on the water-based drilling fluid and/or well-servicing fluid.

4. The use claimed in claims 1 to 3, characterized in that substantially fluorine-free layer silicates corresponding to general formula (I) are used.

5. The use claimed in claims 1 to 4, characterized in that the layer silicates corresponding to general formula (I) are used in non-hydrophobicized form.

6. The use claimed in claims 1 to 5, characterized in that the water-soluble organic polymer compounds are used in quantities of up to 5% by weight and preferably in quantities of no more than 3% by weight, based on the aqueous phase as a whole.

7. The use claimed in claims 1 to 6, characterized in that mixtures of layer silicates corresponding to general formula (I) and water-soluble organic polymer compounds in quantitative ratios of from 2 : 98 to 98 : 2 parts by weight and more especially in quantitative ratios of from 30 : 70 to 70 : 30 parts by weight are used.

8. The use claimed in claims 1 to 7, characterized in that the drilling fluids and/or well-servicing fluids additionally contain finely divided silica, more especially pyrogenic silica or precipitated silica or modified forms thereof and/or finely divided crystalline zeolites, more especially zeolite NaA.

9. The use claimed in claims 1 to 8, characterized in that the layer silicates corresponding to general formula (I) are used in low-solids drilling fluids of which the solids content is preferably no more than 10% by weight and more especially no more than 7% by weight.

**Revendications**

1. Utilisation de silicates lamellaires synthétiques, aptes au gonflement, de formule générale (I)

$$MgO . aMA . bAl_2O_3 . cSiO_2 . nH_2O \qquad (I)$$

dans laquelle

M = $Na^+$ et/ou $Li^+$ pour un rapport Na/Li égal ou plus grand que 1

A = $F^-$, $OH^-$ et/ou $1/2\ O^{2-}$ et

a, b, c et n représentent des nombres selon

a = 0,1 - 0,6

b = 0 - 0,3

c = 1,2 - 1,7

n = 0 - 3,0

en tant que composant minéral stable à hautes températures et insensible aux ions alcalino-terreux, conjointement avec des composés polymères choisis dans les classes des acides polyvinylsulfoniques, en particulier les homopolymères correspondants, ou les polymères de styrène sulfonés en particulier les copolymères correspondants à base d'acide vinylsulfonique ou d'acide styrènesulfonique avec des vinylacylamides et le cas échéant des acryl- et/ou des méthacrylamides dans l'épaississement thixotrope de fluides aqueux de forage, de solutions aqueuses de nettoyage de puits de forage, de fluides aqueux de support pour fissuration hydraulique et fluides aqueux d'espace annulaire.

2. Mode de réalisation selon la revendication 1, caractérisé en ce que l'on utilise les silicates lamellaires de formule générale (I) dans des fluides de forage et/ou de traitement de puits de forage qui sont utilisés à des températures au-dessus de 175°C, en particulier à des températures d'au moins 200°C.

3. Mode de réalisation selon les revendications 1 et 2, caractérisé en ce que l'on utilise les silicates lamellaires de formule générale (I) en quantités allant jusqu'à 3 % en poids, de préférence en quantités allant de 0,1 à 2,5 % en poids et en particulier en quantités allant de 0,5 à 2 % en poids, le % en poids à chaque fois rapporté à la composition aqueuse de fluide de forage et/ou de traitement de puits de forage.

4. Mode de réalisation selon les revendications 1 à 3, caractérisé en ce que l'on utilise essentiellement des silicates lamellaires dépourvus de fluor, de formule générale (I).

5. Mode de réalisation selon les revendications 1 à 4, caractérisé en ce que les silicates lamellaires de formule générale (I) sont utilisés sous forme non hydrophobisée.

6. Mode de réalisation selon les revendications 1 à 5, caractérisé en ce que les composés polymères organiques solubles dans l'eau sont utilisés en quantités allant jusqu'à environ 5 % en poids - de préférence en quantités qui ne sont pas supérieures à environ 3 % en poids - à chaque fois rapporté à la phase totale aqueuse.

7. Mode de réalisation selon les revendications 1 à 6, caractérisé en ce que des mélanges de silicates lamellaires de formule générale (I) et de composés polymères organiques solubles dans l'eau sont utilisés en rapports quantitatifs de 2:98 à 98:2 en parties en poids, en particulier dans la zone d'environ 30:70 à 70:30 parties en poids.

8. Mode de réalisation selon les revendications 1 à 7, caractérisé en ce que les compositions de fluide de forage et/ou les compositions de traitement de forage renferment en supplément de l'acide silicique finement divisé, en particulier de l'acide silicique pyrogéné ou de l'acide silicique de précipitation ou des types modifiés de ces zéolites et/ou des zéolites cristallines finement divisées, en particulier de la zéolite NaA.

9. Mode de réalisation selon les revendications 1 à 8, caractérisé en ce que les silicates lamellaires de formule générale (I) sont utilisés dans des compositions de fluides de forage, pauvres en solides dont la teneur en solide ne dépasse pas de préférence environ 10 % en poids et en particulier environ 7 % en poids.